# EUROPEAN PATENT SPECIFICATION

(11) **EP 2 131 090 B1**
(45) Date of publication and mention of the grant of the patent: **07.12.2011**
(21) Application number: 09007440.2
(22) Date of filing: 05.06.2009
(51) Int. Cl.: F16L 37/14

(54) **Safety quick coupling for pipes**
Sicherheitsschnellkupplung für Rohre
Raccord rapide de sécurité pour tuyaux

(30) Priority: 06.06.2008 IT MI20081034
(43) Date of publication of application: 09.12.2009
(73) Proprietor: IVG Colbachini S.p.A., 35030 Cervarese Santa Croce (PD) (IT)
(72) Inventor: Aldinio Colbachini, Giuseppe, 35030 Cervarese Santa Croce (PD) (IT)
(74) Representative: Cicogna, Franco

(56) References cited:
- EP-A2- 1 865 244
- US-A- 2 458 714
- US-A- 3 127 199

## Description

### BACKGROUND OF THE INVENTION

The present invention relates to a novel safety quick coupling for pipes in general.

The field of the invention is that of the pipe couplings being used for attaching the end portions of two pipes to be fitted to one another.

Prior quick coupling joints conventionally comprise a flexible body engaged in facing slots of the male and female parts of the coupling in its installed condition.

The above prior quick coupling, however, has the drawback that it does not assure a mechanical sealing of the junction, because of a possible disengagement of the flexible body from the seat therefor, for example under vibrations, or mutual rotary movements of the two coupling or joint parts. US-A-3 127 199 shows a quick coupling for pipes, wherein an attachment screw is provided for fixing the free end portion of a locking cable against impacts, vibrations, torques and the like.

### SUMMARY OF THE INVENTION

Accordingly, the aim of the present invention is to provide such a novel quick coupling for pipes in general which, with respect to prior like quick couplings, is so designed as to assure a perfect mechanical tight connection against possible disengagements of the fixing flexible elements, for example due to mutual rotary movements of the coupling elements, vibrations and the like.

The above mentioned aim, as well as yet other objects, which will become more apparent hereinafter, are achieved by the safety coupling having the characterizing features of claim 1.

Preferred embodiments of the invention are defined in the dependent claims.

With respect to prior quick coupling joins or assemblies, the quick coupling according to the present invention, as stated, provides the great advantage of assuring a tight mechanical coupling even in the presence of vibrations, impacts, torques and the like loading the coupling.

### BRIEF DESCRIPTION OF THE DRAWINGS

The above mentioned advantages and features, as well as further advantages and features of the invention, will become more apparent hereinafter from the following disclosure of a preferred embodiment of the invention, which is illustrated, by way of an indicative, but not limitative, example in the accompanying drawings, where:
Figure 1 is an overall perspective view showing the quick coupling of the invention in an assembled condition thereof;
Figure 2 shows the quick coupling of figure 1, in an opened condition;

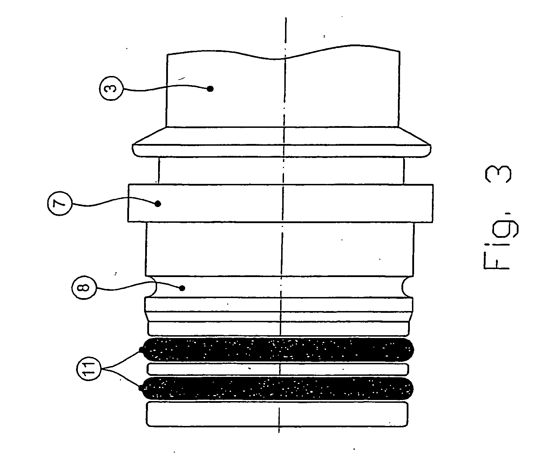

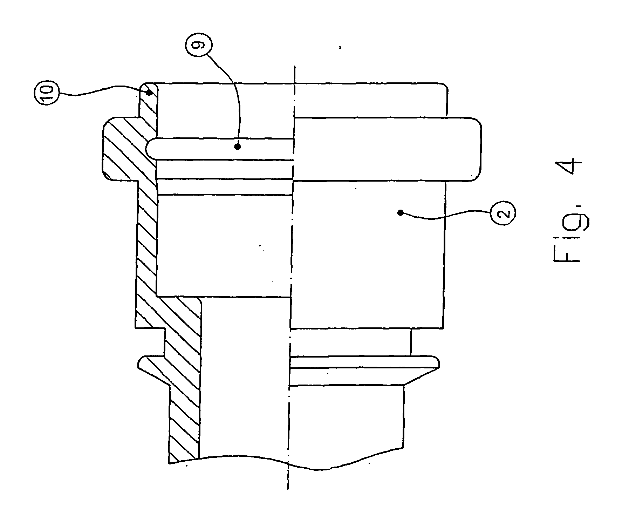

Figures 3 and 4 show a detail of the end portions, respectively a male part and a female part, of the quick coupling shown in figure 1;
Figure 5 is a perspective view showing a detail of the female part of figure 4, on which is mounted a mechanical closure flexible cable included in the quick coupling; and
Figures 6 and 7 are respectively a longitudinal and cross section view showing the quick coupling of figure 1.

### DESCRIPTION OF THE PREFERRED EMBODIMENTS

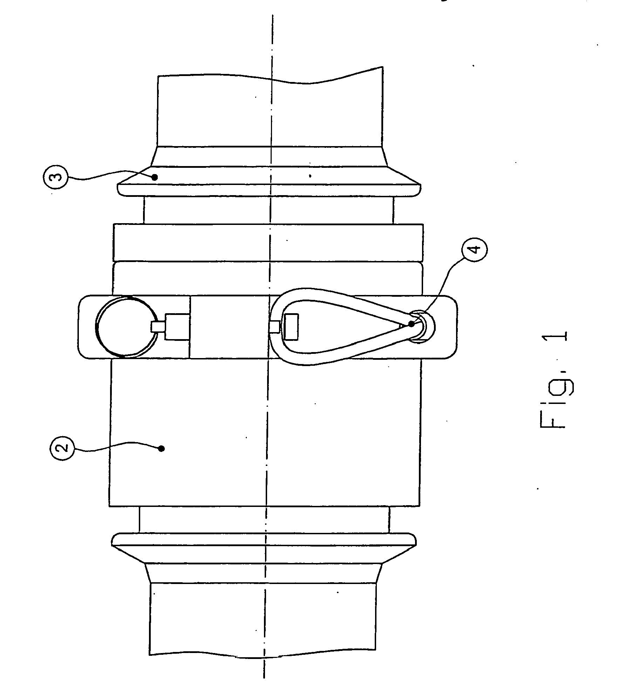

The safety quick coupling according to the present invention has been generally indicated in figure 1 by the reference number 1.

Said quick coupling comprises essentially a female part 2 and a male part 3, which are coupled to one another and held in a closure position thereof by a flexible cable or cord, preferably made of a steel material and indicated by the reference number 4.

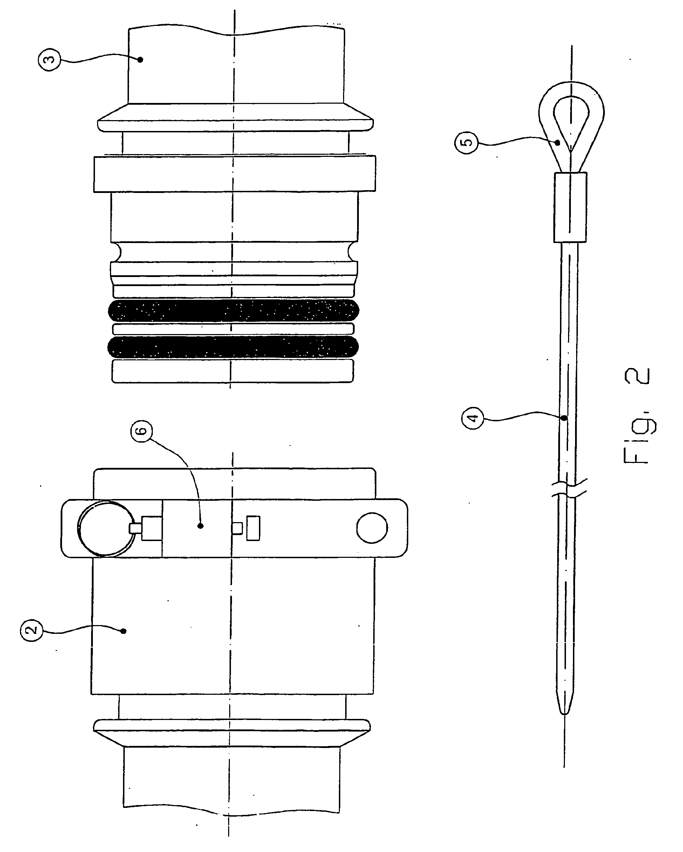

Moreover, as is clearly shown in figures 1 and 2, at an end portion of said cable 4 a loop 5, adapted to be engaged in a safety spring catch 6, which will be disclosed in a more detailed manner hereinafter, is provided.

The end portion 7 of the male part 3 of the quick coupling comprises a groove or slot 8 adapted to mate with or overlap, with the coupling in an assembled position, on the corresponding groove or slot 9 of the end portion 10 of the female part 2 of said quick coupling 1.

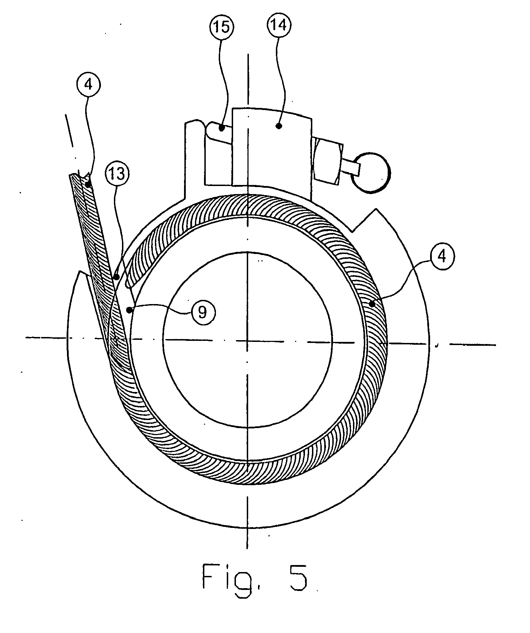

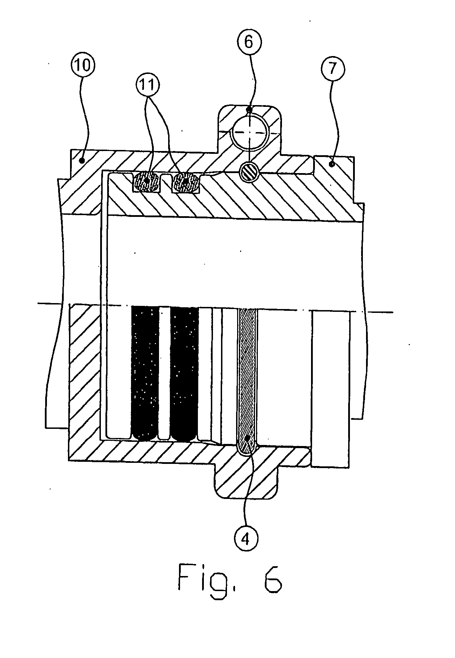

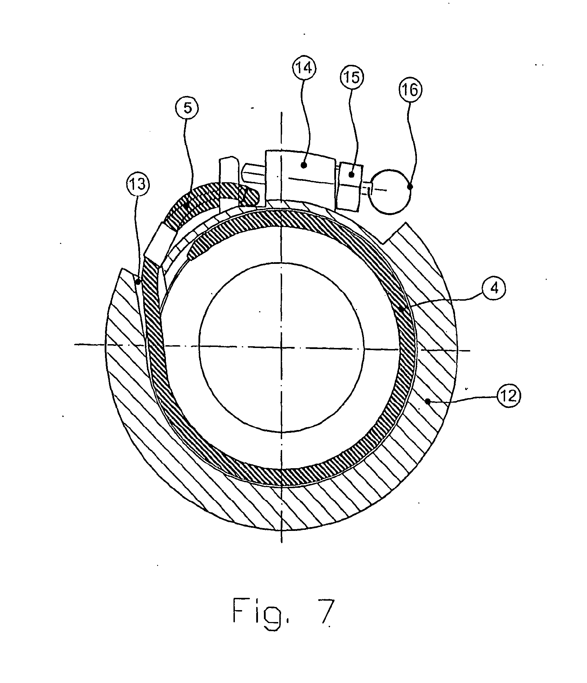

As shown in figures 5 to 7, the two coupling parts 2 and 3 are coupled by engaging the cable 4 in the channel defined by the facing surfaces of the grooves 8 and 9 respectively.

Said coupling further provides to use gaskets 11, advantageously of a O-ring type, for providing a hydraulically tight connection.

Advantageously, according to the present invention, on the end portion 10 of the female part 2 of the coupling 1, is provided a shoulder or rib 12, in which is formed a longitudinal hole 13 for introducing the cable 4 into the channel formed between the facing grooves respectively 8 of the male part and 9 of the female part of the coupling.

In particular, the safety closure of the coupling 1, made by said cable 4, is assured by an engagement of the loop element 5 of said cable 4 inside the spring catch 6 arranged at the end portion 10 of the female part 2.

Preferably, said spring catch element 6 comprises a steel block 14, in which is formed a recess for slidably housing therein a pin 15 driven against a biassing spring (not shown), thereby gripping the ring free end portion 16 of said pin 15.

In operation, the end portion 7 of the male part 3 of the coupling 1 will be engaged in the corresponding end portion 10 of the female part 2, thereby causing the positions of the respective grooves 8 and 9 to mutually coincide.

Then, the cable 4 is engaged in the hole 13 of said rib 12, thereby closing the channel formed by the circumferential space between said grooves 8 and 9.

A the end of the inserting operation, the cable 4 will project from the coupling at said loop element 5, which is caused to be clamped on said spring catch 6 at its pin 15.

Thus, a perfect mechanical tightness of the coupling will be assured, since accidental vibrations or rotary movements of the two parts 2 and 3 of said coupling will not be able of disengaging the cable 4 from the recess or seat therefor.

## Claims

1. A quick coupling for pipes, of a type comprising a cable (4) designed to be engaged in a space defined between facing slots or grooves (8, 9) respectively of the end portions (7, 10) of the male (3) and female (2) parts of said coupling, wherein said coupling comprises safety means adapted to cause said cable (4) to be mechanically engaged in a seat therefor, even in the presence of impacts, vibrations, torques and the like on said coupling (1), said safety means comprising a loop element (5) arranged at a free end portion of said cable (4) projecting from said coupling (1), **characterized in that** said safety means comprises a spring catch (6) mounted on an outer wall of the end portion (10) of said female part (2).

2. A coupling, according to claim 1, **characterized in that** said spring catch (6) comprises a block (14) housing therein a pin (15) adapted to slide against a counter biasing spring and including a gripping end portion (16).

3. A coupling, according to claim 2, **characterized in that** said coupling further comprises a rib (12) projecting from the outer wall of the end portion (10) of said female part (2), and including a longitudinal hole (13) for engaging said cable (4) in the respective slot (9).

4. A coupling, according to one or more of the preceding claims, **characterized in that** said coupling comprises moreover sealing gaskets (11).

## Patentansprüche

1. Schnellkupplung für Rohre von einer Art, die ein Kabel (4) umfasst, das zum Eingriff in einem Raum, welcher zwischen zueinander gerichteten Schlitzen oder Nuten (8, 9) der jeweiligen Endabschnitte (7, 10) des Einsteck- (3) und des Aufnahmeteils (2) der Kupplung definiert ist, bestimmt ist, wobei die Kupplung ein Sicherheitsmittel umfasst, das dazu geeignet ist, zu bewirken, dass das Kabel (4) selbst bei einem Vorhandensein von Stößen, Schwingungen, Drehmomenten und dergleichen an der Kupplung (1) mechanisch in einem dafür bestimmten Sitz in Eingriff gebracht ist, wobei das Sicherheitsmittel ein Ösenelement (5) umfasst, das an einem freien Endabschnitt des Kabels (4), der von der Kupplung (1) vorspringt, angeordnet ist, **dadurch gekennzeichnet, dass** das Sicherheitsmittel eine Schnappfeder (6) umfasst, die an einer Außenwand des Endabschnitts (10) des Aufnahmeteils (2) angebracht ist.

2. Kupplung nach Anspruch 1, **dadurch gekennzeichnet, dass** die Schnappfeder (6) einen Block (14) umfasst, in dem ein Stift (15) untergebracht ist, der dazu geeignet ist, an einer Gegenspannfeder zu gleiten, und einen Greifendabschnitt (16) aufweist.

3. Kupplung nach Anspruch 2, **dadurch gekennzeichnet, dass** die Kupplung ferner eine Rippe (12) umfasst, die von der Außenwand des Endabschnitts (10) des Aufnahmeteils (2) vorspringt und eine längsgerichtete Öffnung (13) aufweist, um das Kabel (4) in dem entsprechenden Schlitz (9) in Eingriff zu bringen.

4. Kupplung nach einem oder mehreren der vorhergehenden Ansprüche, **dadurch gekennzeichnet, dass** die Kupplung überdies Dichtungen (11) umfasst.

## Revendications

1. Raccord rapide pour tuyaux, d'un type comprenant un câble (4) conçu pour être engagé dans un espace défini entre des fentes ou des rainures (8, 9) respectivement, qui se font face, des portions d'extrémité (7, 10) des parties mâles (3) et femelles (2) dudit raccord, dans lequel ledit raccord comprend des moyens de sécurité conçus pour provoquer l'engagement mécanique dudit câble (4) dans un siège prévu à cet effet, même en cas d'impacts, de vibrations, de couples et similaires sur ledit raccord (1), lesdits moyens de sécurité comprenant un élément de boucle (5) agencé au niveau d'une portion d'extrémité libre dudit câble (4) qui fait saillie à partir dudit raccord (1), **caractérisé en ce que** lesdits moyens de sécurité comprennent une fermeture à ressort (6) montée sur une paroi extérieure de la portion d'extrémité (10) de ladite partie femelle (2).

2. Raccord selon la revendication 1, **caractérisé en ce que** ladite fermeture à ressort (6) comprend un bloc (14) abritant, à l'intérieur, une broche (15) conçue pour coulisser contre un contre-ressort d'inclinaison et comprenant une portion d'extrémité de prise (16).

3. Raccord selon la revendication 2, **caractérisé en ce que** ledit raccord comprend en outre une nervure (12) qui fait saillie à partir de la paroi extérieure de la portion d'extrémité (10) de ladite partie femelle (2), et comprenant un trou longitudinal (13) permettant d'engager ledit câble (4) dans la fente (9) respective.

4. Raccord selon une ou plusieurs des revendications précédentes, **caractérisé en ce que** ledit raccord comprend de plus des joints étanches (11).
